(19)

Europäisches
Patentamt
European
Patent Office
Office européen
des brevets

(11) **EP 4 537 981 A1**

(12) **EUROPEAN PATENT APPLICATION**
published in accordance with Art. 153(4) EPC

(43) Date of publication:
**16.04.2025  Bulletin 2025/16**

(21) Application number: **23822980.1**

(22) Date of filing: **06.06.2023**

(51) International Patent Classification (IPC):
**B24B 31/116** *(2006.01)*    **B24B 31/12** *(2006.01)*

(86) International application number:
**PCT/CN2023/098692**

(87) International publication number:
**WO 2023/241411 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.06.2022  CN 202210659823**

(71) Applicants:
• **AECC Shanghai Commercial Aircraft Engine
  Manufacturing Co., Ltd.
  Shanghai 201306 (CN)**
• **Shaanxi JXTT.Material Technology Co., Ltd.
  Xi'an, Shaanxi 710086 (CN)**

(72) Inventors:
• **LEI, Liming
  Shanghai 201306 (CN)**

• **MI, Tianjian
  Shanghai 201306 (CN)**
• **WANG, Xiaokang
  Shanghai 201306 (CN)**
• **FAN, Linna
  Shanghai 201306 (CN)**
• **WANG, Wei
  Shanghai 201306 (CN)**
• **ZHOU, Xinmin
  Shanghai 201306 (CN)**
• **GAO, Junshuai
  Shanghai 201306 (CN)**

(74) Representative: **Marchioro, Paolo
  Studio Bonini S.r.l.
  Corso Fogazzaro, 8
  36100 Vicenza (IT)**

(54) **FINISHING DEVICE AND FINISHING METHOD**

(57)    A finishing device, comprising a thrust system (101), a sealing system (102), a conveying pipe system (103), and a recovery system (104), wherein the sealing system (102) comprises a piston (21) and a cylinder body (18) cooperating with the piston (21); the cylinder body (18) is used for accommodating a finishing medium (8) for performing finishing processing; the conveying pipe system (103) conveys the finishing medium (8) to a port of an inner-flow-channel workpiece (34); the recovery system (104) comprises a recovery container (35), a recovery pipe (36), a return pipe (37), a power assembly (130), and a control valve assembly (140); the control valve assembly (140) comprises a first valve (38) and a second valve (39); the recovery container (35) is in communication with the inner-flow-channel workpiece (34) by means of the recovery pipe (36), and is in communication with the sealing system (102) by means of the return pipe (37); the first valve (38) cooperates with the sealing system (102) and a low-pressure environment; the second valve (39) is located at the return pipe (37) and cooperates with the recovery container (35) and the sealing system (102); and the power assembly (130) is in communication with the recovery container (35). By means of the cooperation of all parts, rapid supplementation of the finishing medium of the sealing system is realized, ensuring the efficiency of finishing processing. Further provided is a finishing method.

EP 4 537 981 A1

a liquid-solid two-phase polishing medium is used, the viscosity of the liquid phase of the polishing medium is < 1000cP, and the solid phase includes abrasive particles

a predetermined pressure is applied to the polishing medium, making the polishing medium flow in the micro inner flow channel at a flow velocity more than 5m/s, and flow rate of the polish polishing medium flowing into the micro inner flow channel at one end reaches a saturation flow value allowed by the bore of the micro inner flow channel, making the hydraulic pressure inside the inner flow channel be in a pressure holding state

FIG. 1

**Description**

Field

The present disclosure relates to the field of precision processing of the inner flow channel, in particular to a polishing device and a polishing method.

Background

Parts with micro inner flow channel structure have a wide range of disclosures in aerospace, shipbuilding, nuclear, automobile, mold and other industrial fields, especially the parts related to fluid power systems often have complex internal cavity structures such as micro flow channels, deep micro holes and micro flow channels communicating with deep micro holes, etc., which play the functions of transporting, exchanging or applying hydraulic pressure to fluids, such as fuel nozzles, heat exchangers, hydraulic components, oil circuit control throttles, etc.

Process technologies that can process micro inner flow channels include precision machining, femtosecond/water-conduction/long-pulse laser processing, EDM and additive manufacturing (3D printing). In addition to additive manufacturing technology, the structure of the micro inner flow channel processed by other single processes is relatively simple, and the length and diameter are relatively small, and the micro inner flow channel can be processed only in combination with other combined processes such as welding. Micro inner flow channels by precision machining can cause problems such as burrs, inflection points, sharp corners, or tool transfer steps; Femtosecond laser-machined micro inner flow channel surfaces produce adhered residue particles and a surface "step" effect. Remelt layers will be generated on the surface of the micro inner flow channel of water-conduction/long-pulse lasers and EDM. Additive manufacturing (3D printing) is a technology that discretizes the model of complex three-dimensional structural parts into two-dimensional structures for layer-by-layer superimposition, which makes it possible to integrally form complex micro inner flow channel parts, so it is increasingly used in aerospace, automotive, mold and other industrial fields. However, due to the temperature gradient and layer-by-layer molding characteristics of additive manufacturing technology in the manufacturing process, there are semi-sintered or bonded powder particles on the surface of the inner flow channel of the part and the surface "step" effect.

Machining burrs, femtosecond laser processing of inner flow channel adhesion of sintered particles, additive manufacturing of inner flow channel surface bonding powder, etc., will affect the performance and safety of parts: when the fluid entering the inner flow channel and the surface layer friction at high speed causes burrs, adhesion residue particles or binder powder to fall off, it will become excess and spread everywhere with the fluid, or block the fuel/oil circuit or cause mechanical wear failure, resulting in major safety accidents. The internal surface with large roughness is easy to become a source of fatigue cracks in the process of long-term use, and it is easy to lead to carbon deposition if it is a high-temperature oil circuit system. The cutting lines, sharp corners of the inflection point or the connecting step on the surface of the machined flow channel, and the "step" phenomenon on the surface of the flow channel in femtosecond laser and additive manufacturing processing will lead to turbulence, eddy currents and a sharp increase in the resistance along the fluid during the fluid movement, and even cause the fluid to run out of control, produce vibration and reduce the service life of the parts. The rough surface will also cause a large number of cavitation bubbles to be generated in the fluid, affecting combustion and hydraulic force, and even cavitation corrosion. For some parts of specific materials (such as hollow blades) in the inner flow channel and connecting holes, the surface of the remelt layer is prone to microcracks, resulting in premature failure of the parts, so it is required to reduce the thickness of the remelt layer or not allow the remelt layer. Therefore, when processing the inner flow channel surface of fluid dynamic parts through precision machining, femtosecond/water-conduction/long-pulse laser processing, EDM, additive manufacturing (3D printing) and other technologies, it will bring unfavorable problems such as burrs, residues such as binder powder and sintered particles, surface roughness and remelt layer, etc., and it is necessary to use appropriate surface polishing technology to eliminate these adverse effects in order to meet the performance requirements of the product.

However, at present, the technology that can effectively polish the surface of the micro complex inner flow channel has not yet developed, so that at present, for the micro complex inner flow channel workpiece by additive manufacturing, the roughness of the internal surface generally only has the original average roughness $Ra \geq 6.3 \ \mu m$ after additive manufacturing, and the product by additive manufacturing with the optimal surface roughness $Ra$ of the inner flow channel is less than or equal to 1.6 $\mu m$ does not exist. And for the laser processing and EDM machining, the product with the optimal surface roughness $Ra$ of the inner flow channel is less than or equal to 0.8 $\mu m$ does not exist. And for the machined processing, the product with the optimal surface roughness $Ra$ of the inner flow channel is less than or equal to 0.4 $\mu m$ does not exist. And if the current micro complex inner flow channel has micro complex channels with special shape such as S-shaped bend, L-shaped bend, U-shaped bend, O-shaped bend, etc., it cannot be realized by machining which can only carry out linear cutting, but can only be realized by additive manufacturing and other methods, so there is no product with the optimal surface roughness $Ra$ of less than or equal to 1.6 $\mu m$ for the surface of the micro complex inner flow channel with special shape by additive manufacturing.

Summary

One object of the present disclosure is to provide a polishing device and a polishing method.

First, the disclosure provides a polishing device, including a thrust system; a thrust system; a sealing system including a piston and a cylinder body matched with the piston for accommodating a polishing medium for polishing, the thrust system communicating with one end of the piston, and providing a driving force to the sealing system to drive the polishing medium to output from an outlet end of the cylinder body; a conveying pipeline system, the conveying pipeline system conveying the polishing medium accommodated by the corresponding sealing system to one end of an inner flow channel workpiece for polishing, an upstream end of the conveying pipeline system being connected with an outlet end of the sealing system, and a downstream end being used for outputting the polishing medium to polish the inner flow channel workpiece; a recycle system including a recycle container, a recycle pipeline, a return pipeline, a driving assembly, and a control valve assembly, wherein the control valve assembly includes a first valve, a second valve; and the recycle container is communicated with the workpiece through the recycle pipeline, and communicated with the sealing system through the return pipeline; and the first valve is matched with the sealing system and a low-pressure environment, and the second valve is located at the return pipeline, and is coordinated with the recycle container and the sealing system, and the driving assembly is communicated with the recycle container, providing driving force to the recycle container, to make the polishing medium in the recycle container flow back to the cylinder body.

In the embodiments of the present disclosure, the recycle system uses the first valve, the second valve and the synergistic effect of both with the sealing system, the recycle container, the return pipeline and the driving assembly, which not only ensures that the return flow of the sealing system and the output flow of the sealing system conveying the polishing medium do not interference, but also makes the polishing medium accommodated in the recycle system can flow back to the sealing system quickly.

In some embodiments, the first valve is a nozzle flapper valve, and the polishing device has a first state and a second state, wherein:

in the first state, the sealing system conveys the polishing medium to the conveying pipeline system, and the polishing medium accommodated by the sealing system acts on a nozzle of the nozzle flapper valve to close the nozzle flapper valve, and the second valve is closed;
in the second state, the sealing system stops conveying the polishing medium to the conveying pipeline system, the polishing medium accommodated by the sealing system stops acting on the nozzle of the nozzle flapper valve, to open the nozzle flapper valve, and the sealing system is communicated with the low-pressure environment, and the second valve is opened, and the driving assembly exerts pressure to a first pressure on the recycle container, and a pressure difference between the recycle container and the sealing system by a pressure difference between the first pressure and the low-pressure environment.

In some embodiments, the second valve is a solenoid valve, and the control valve assembly further includes a sensor, the sensor is used for sensing mass of the polishing medium of the recycle container, and the solenoid valve is opened or closed according to sensing result of the sensor.

In some embodiments, the sensor is a gravity sensor, and height of the recycle container is higher than height of the sealing system.

In some embodiments, the recycle container is a transparent container, and the polishing medium accommodated by the recycle container is externally visible.

In some embodiments, a wall of the recycle container has a volumetric scale mark.

In some embodiments, the recycle container is provided with a thermometer or a viscometer.

In some embodiments, the polishing device further includes a diagnostic device, the diagnostic device has a flow rate and/or a flow velocity sensor, and a pressure sensor, for sensing the flow rate and/or flow velocity, as well as the pressure of the polishing medium.

In some embodiments, the piston has at least a first groove and a second groove from top to bottom, and the sealing system further includes a sealing ring positioned between the piston and the cylinder body, the sealing ring includes a first sealing ring arranged in the first groove and a second sealing ring arranged in the second groove, and a gap between the piston and the cylinder body in a radial direction is 1mm~2.5mm.

In some embodiments, the first groove is a split structure, and a top surface of the piston is a flat surface, and a cover plate is detachably arranged on it, and periphery of the cover plate has an inclined surface, and the inclined surface and the top surface of the piston form a unilateral inclined groove, and constitutes the first groove; and the second groove is formed in a side wall of the piston; and material of the first sealing ring is a hard material, and material of the second sealing ring is a soft material.

In some embodiments, the material of the first sealing ring meets following requirements: bending modulus 1.9GPa~3.6GPa, elongation 60%~120%, Knoop hardness 90HK ~ 100HK; and the material of the second sealing ring meets following requirements: bending modulus 0.2GPa~0.25GPa, elongation 300%~380%, bending strength 80MPa~100MPa.

In some embodiments, the polishing medium includes a liquid phase and a solid phase, and viscosity of the liquid phase < 1000cP, and the solid phase includes abrasive particles, and the workpiece is a micro inner flow channel piece, and a diameter is less than or equal to 3mm and a length-diameter ratio is greater than or equal to 50:1. Secondly, the disclosure provides a polishing method, employing the polishing device as described in the above mentioned embodiments, the polishing medium includes a liquid phase and a solid phase, and viscosity of the liquid phase < 1000cP, the solid phase includes abrasive particles, and the workpiece is a micro inner flow channel piece, and a diameter is less than or equal to 3mm and a length-diameter ratio is greater than or equal to 50:1, and the thrust system of the polishing device exerts a predetermined pressure on the polishing medium, making the polishing medium flow in the micro inner flow channel at a flow velocity more than 5m/s, and flow rate of the polishing medium flowing into the micro inner flow channel at one end reaches a saturation flow rate allowed by the bore of the micro inner flow channel, making the hydraulic pressure inside the inner flow channel be in a pressure holding state.

Description of attached drawings

The above and other features, properties and advantages of the present disclosure will be made more apparent by the following descriptions in conjunction with the drawings and embodiments, it should be noted that the drawings are only examples, they are not drawn according to the conditions of equal proportions, and should not be used as a limitation on the scope of protection actually claimed by the present disclosure, where:

Fig. 1 is a schematic diagram of the flow chart of the polishing method according to some embodiments of the present disclosure.
Fig. 2 is a schematic diagram of the structure of the polishing device according to some embodiments of the present disclosure.
Fig. 3 is a schematic diagram of a partial enlargement based on Fig. 2 at A.
Fig. 4 is a schematic diagram of a partial enlargement based on Fig. 2 at B.

Detailed Description of Embodiments

The following discloses embodiments of the subject technical solutions described. For the sake of simplification of disclosure, specific examples of each element and arrangement are described below, of course, these are only examples and do not limit the scope of protection of the present disclosure. "One embodiment", "an embodiment", and/or "some embodiments" refer to a feature, structure or characteristic related to at least one embodiment of the present disclosure. Therefore, it should be emphasized and noted that "an embodiment" or "one embodiment" or "one or more embodiments" mentioned twice or more in different positions in this specification do not necessarily refer to the same embodiment. In addition, some features, structures or characteristics in one or more embodiments of the present disclosure may be appropriately combined.

A flowchart is used in the present application to illustrate the operation performed by the system according to an embodiment of the present application. It should be understood that the preceding or following operations are not necessarily performed accurately in order. Other operations can also be added into these processes, alternatively, one or more steps of operations can also be removed from these processes.

In addition, the average roughness described below, that is, the average roughness of the measured surface is obtained by selecting a plurality of areas on the measured surface and taking an average of the measured surface. The optimal roughness described below is that a plurality of areas selected on the measured surface for measurement and the minimum value is taken to obtain the optimal roughness of the measured surface. For example, when performing roughness measurement, for example, a certain area of roughness measurement can be a pipe section with a length of 8 mm, and multiple pipe sections with a length of 8 mm can be selected to measure and take the minimum value in the measured pipeline.

Parts with micro and complex inner flow channel structures have a wide range of disclosures in aerospace, shipbuilding, nuclear, automobile, mold and other industrial fields, however, the current processing technology, such as precision machining, femtosecond/water-conduction/long-pulse laser processing, EDM, additive manufacturing (3D printing) and other technologies when processing the inner flow channel surface of fluid power parts, will bring unfavorable problems such as burrs, residues such as binder powder and sintered particles, rough surfaces and remelt layers. These negative effects need to be eliminated with the proper surface polishing technology to meet the performance requirements of the product.

At present, the product by additive manufacturing with the optimal surface roughness $Ra$ of the inner flow channel is less than or equal to 1.6 $\mu$m does not exist. And for the laser processing and EDM machining, the product with the optimal surface roughness $Ra$ of the inner flow channel is less than or equal to 0.8 $\mu$m does not exist. And for the machined processing, the product with the optimal surface roughness $Ra$ of the inner flow channel is less than or equal to 0.4 $\mu$m does not exist. And if the current micro complex inner flow channel has micro complex channels with special shape such as S-shaped bend, L-shaped bend, U-shaped bend, O-shaped bend, etc., it cannot be realized by machining which can only carry out linear cutting, but can only be realized by additive manufacturing and other methods, so there is no product with the optimal surface roughness $Ra$ of less than or equal to 1.6 $\mu$m for the surface of the micro complex inner flow channel with special shape by additive manufacturing.

After in-depth research, the inventors tried and compared a variety of surface polishing methods for the inner flow channel, and found that when the diameter of the inner flow channel of the part is large (>3mm), the length-diameter ratio is relatively small (<50:1), and the extending direction is approximately straight, common methods such as manual grinding, chemistry, electrochemistry, plasma, magnetism, magneto-rheology, abrasive flow, water jet and ultrasonic can be used for polishing, however, for the inner flow channel with a small diameter (less than or equal to 3mm) and a big length-diameter ratio (greater than or equal to 50: 1):

(1) Using abrasive flow technology, using the semi-solid soft paste polishing medium with greater rigidity to the internal cavity through the extrusion grinding mechanism, the inventors found that the creep fluid in the very small state of the Reynolds number is difficult to achieve uniform processing through the complex long-range micro-micro flow channel, and is easy to be blocked in the bend and dead angle, and if a forced pass will cause the flow channel to deform and even crack the flow channel. Even when the polishing medium barely passed through the flow channel with a length-diameter ratio ≥50:1, the pressure and flow velocity will decay sharply as the length of flow path increases, resulting in the inner flow channel port being "over-polished" and the interior being "unpolished" due to excessive pressure and flow rate loss. In addition, the colloidal abrasive flow medium that is insoluble in water is easy to remain in the bends and dead corners of the inner flow channel, and it is difficult or even impossible to be completely removed after the completion of processing.

(2) Using abrasive water jet technology, also known as micro abrasive slurry jet, high-speed flow and high-speed water particle polishing, by applying liquid pressure to the water jet nozzle, using the nozzle to spray out a water jet with abrasive particles to impact kinetic energy erosion to remove the surface material of the workpiece, the water jet nozzle and the surface of the part keep a short distance, so it is difficult for the abrasive water jet technology to act on the micro inner flow channel with a small diameter (less than or equal to 3mm) and a relatively large length diameter (greater than or equal to 50: 1) of the inner flow channel.

(3) Using magnetic polishing technology, it can only do slight polishing processing on the surface of the inner flow channel with a diameter of >3mm and with a nearly straight extension, but cannot effectively surface polish the surface of the inner flow channel containing S-shaped bend, L-shaped bend, U-shaped bend, O-bend and spiral bend with a diameter less than or equal to 3mm and a with three-dimensional spatial direction. The reason is that magnetic polishing is a kind of flexible processing using a larger size magnetic needle abrasive particle, and its principle is that the surface bump and concave point will be processed at the same time under the action of the external magnetic field. Therefore, these flexible processing methods can only improve the surface with slight polishing, and even if the amount of material removed is large, it cannot significantly improve the "step" effect of the surface, reduce the surface roughness, and remove the powder, particles and burrs adhered to the surface on a large scale. In addition, this method cannot cope with the complex inner flow channel polishing with three-dimensional spatial direction on the part due to the controlled magnetic field motion.

(4) Using the chemical polishing method, when the diameter of the inner flow channel is very small and the corrosion solution that can be accommodated is less, the efficiency of the chemical polishing method will be extremely low and even the reaction bubble will occur locally and block the solution flow, causing the workpiece cannot be polished.

(5) Using electrochemical, plasma shaping and ultrasonic methods, it is difficult to place profiling electrodes in narrow three-dimensional flow channels containing S-bend, L-bend, U-bend, O-bend, spiral bend, etc., so that it is hard to polish the complex micro inner flow channel.

In addition, for (4) and (5), chemical, electrochemical, plasma polishing and other methods will also produce a variety of corrosion and metamorphic layer defects on the microstructure of the flow channel matrix material, and the corrosive liquid and reaction gas will also have negative effects on the environment and device; at the same time, (4) and (5) are also flexible processing methods, which will also face similar shortcomings of (3), which can only make slight polishing improvement on the surface, and even if the amount of material removed is large, it cannot significantly improve the "step" effect of the surface, reduce the surface roughness and peel off the powder, particles and burrs adhered to the surface on a large scale.

To sum up, the inventors has found that the above-mentioned processing methods will face the problems that it is difficult to flow deeply into the micro inner flow channel to do polishing work and/or the unsatisfactory quality of the polishing for the structure of the micro inner flow channel, so it is difficult to apply to the polishing processing of the micro inner flow channel.

Based on the above, the inventors further did in-depth research and invented a surface polishing method for the micro inner flow channel, by using a two-phase flow polishing medium with a viscosity of less than 1000cP liquid phase, the flow velocity of the two-phase flow polishing medium in the micro inner flow channel is >5m/s, and flow rate of the polishing medium flowing into the micro inner flow channel at one end reaches a saturation flow value allowed by the bore of the micro inner flow channel, making the hydraulic pressure inside the inner flow channel be in a pressure holding state, that is, through the synergistic effect of the liquid phase of low viscosity, the flow velocity of the polishing medium and the saturation flow rate, problems of the polishing processing of the micro inner flow channel are solved.

The principle is that, firstly, due to the synergistic effect of the low viscosity liquid phase, the flow velocity of the polishing medium and the saturation flow rate, the polishing medium can smoothly enter the complex micro inner flow channel and form a state similar to that of a non-Newtonian fluid in the complex micro inner flow channel, and the fluid boundary layer is parallel to the surface of the inner flow channel, and the abrasive shear friction in the hard non-Newtonian fluid is like a "cutter-like" to achieve surface bump targeted processing. In addition, the synergistic effect of the above three features makes the friction micro-cutting force generated between the surface of the flow velocity of the polishing medium and the saturation flow rate and abrasive particles of the polishing medium, so that the optimal roughness of the surface can be obtained without the material limitation of the complex micro inner flow channel, but equal to the average contact length range of the abrasive particles tip, and even can be obtained a ultra-mirror quality of the optimal surface roughness $Ra$ 0.05$\mu$m, which breaks through the limitation of the principle of abrasive flow and water jet technology, and the principle is that the cutting mechanism of abrasive flow technology is the volume force generated by the surface of abrasive extrusion. Therefore, the processing of metal and polymer flexible materials with low hardness is prone to pits and pitting ($Ra$>0.8$\mu$m). In abrasive waterjet technology, the cutting force is the erosion force generated by the impact of the abrasive particles on the surface, and the processing of soft metal is easy to roughen the surface ($Ra$>0.8$\mu$m).

In order to develop a polishing device corresponding to the above surface polishing method, the inventors found that the polishing device needs to use a sealing system to accommodate the polishing medium for polishing, and the conveying pipeline system conveys the polishing medium accommodated by the corresponding sealing system to the port of the workpiece of the inner flow channel for polishing.

For some polishing devices, a plurality of sealing systems can be used and fluid exchange can be realized through workpiece communication, such as through two sealing systems and two conveying pipeline systems, each conveying pipeline system conveys the polishing medium accommodated by the corresponding sealing system to different ports of the workpiece of the inner flow channel for polishing, that is, one sealing system outputs the polishing medium to the workpiece, and the other sealing system receives the polishing medium flowing out from the workpiece, and when the polishing medium of one sealing system is consumed, the other sealing system can continue to carry out polishing processing to the workpiece by the polishing medium it receives and in a reverse direction, that is, this other sealing system outputs the polishing medium to the workpiece at this moment, and the sealing system that has finished consumption receives the polishing medium flowing out from the workpiece again at this moment, so that there is always at least one sealing system accommodating the polishing medium that can be provided to the workpiece, and the polishing operation is guaranteed to be carried out continuously and uninterruptedly of the workpiece, so that the polishing process is efficient.

However, after further research, the inventors found that for some micro inner flow channel workpieces, the above-mentioned two-way processing scheme cannot be applied, so the polishing device of multiple sealing systems cannot be applied, for example, when the micro inner flow channel workpiece has the following structure:

1) Only one of the two ports of the micro inner flow channel can be connected with high-strength sealing, and the other port cannot be connected with high-strength sealing, for example, the shape of the port is special-shaped or thin-walled structure, resulting in the inability to machine its corresponding sealing joint, or does not have the strength that can be withstood under the high-strength sealing link.
2) The micro inner flow channel, such as Tesla valve, has a special throttling and diversion function configuration, which can only provide the flow of fluid in one flow direction, and fluid in the other flow directions can only flow at a low speed or even no flow.
3) The micro inner flow channel and the dense hole group are connected, such as the air-cooling holes of the single crystal blade of an aero engine, one end is the internal cavity port of the single crystal blade, and the other end is composed of dense small holes in different special-shaped areas of the blade.

When faced with the above structure, the polishing medium of the two-phase flow can only input from a designated port of the inner flow channel and output from other ports, and cannot be reversed, that is, a plurality of sealing systems cannot be used and the fluid exchange cannot be realized through the interconnection of the workpieces, such as the solution that two sealing systems carry out two-way processing of the workpiece.

For the one-way processing solution, after further research, the inventors found that due to the fast flow rate of the polishing medium, the sealing system consumes the polishing medium very quickly during the polishing process, so it is necessary to quickly supplement the sealing system with automatic reflux of the polishing medium. Based on the above, after in-depth research, the inventors set up a recycle system, and the recycle system uses the first valve, the second valve and the synergistic effect of both with the sealing system, the recycle container, the return pipeline and the driving assembly, which not only ensures that the return flow of the sealing system and the output flow of the sealing system conveying the polishing medium do not interference, but also makes the polishing medium accommodated in the recycle system can flow back to the sealing system quickly, realizing a rapid supplement of the polishing medium to the sealing system, and ensuring high efficiency of polishing processing.

It can be understood that the polishing device of the inner flow channel disclosed in the embodiments of the present disclosure realizes the rapid supplement of the polishing medium, and helps to solve the problems that when the diameter of the inner flow channel is small (less than or equal to 3mm), and the length-diameter ratio is relatively large (greater than or equal to 50: 1) and can only be processed by a one-way flow of the polishing medium, the channel cannot be efficiently processed. However, it can be understood that the embodiments of the present disclosure are applicable not only to the polishing method described in the present disclosure and the micro inner flow channel workpiece that can only be processed in one direction, but also to other flow processing methods and inner flow channel workpieces.

It should be explained that the terms "diameter" and "length" in the context mean the equivalent diameter as well as the equivalent length, and the length-diameter ratio is the ratio of the equivalent length to the equivalent diameter. Equivalent diameter, the cross-sectional shape of the inner flow channel can be circular, elliptical, etc., and the cross-sectional profile is composed of closed curves (non-polygonal lines). The cross-sectional shape of the inner flow channel can also be rectangular, triangular, etc., and the cross-sectional profile is composed of closed polylines. The cross-sectional profile is composed of arbitrary closed curves (non-polylines) or closed polylines, and since the cross-sectional profile is an irregular shape, an equivalent diameter is introduced, which is defined as an ideal circle for any cross-sectional shape that is equal to the actual cross-sectional area of the arbitrary cross-sectional shape, and the diameter of this ideal circle is the equivalent aperture. The equivalent length refers to the total distance traveled by the fluid in the inner flow channel to actually flow between the two ports of the inner flow channel.

Firstly, a polishing method of micro inner flow channel that can be applied to the polishing device of the present disclosure is introduced, so as to facilitate the understanding of the effect of the polishing device.

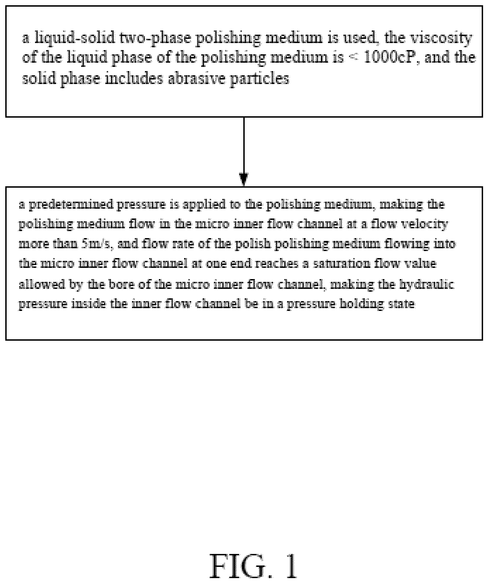

With reference to Fig. 1, the disclosure provides a polishing method for the inner flow channel, including:

a liquid-solid two-phase polishing medium is used, the viscosity of the liquid phase of the polishing medium is < 1000cP, and the solid phase includes abrasive particles.
a predetermined pressure is applied to the polishing medium, making the polishing medium flow in the micro inner flow channel at a flow velocity more than 5m/s, and flow rate of the polishing medium flowing into the micro inner flow channel at one end reaches a saturation flow value allowed by the bore of the micro inner flow channel, making the hydraulic pressure inside the inner flow channel be in a pressure holding state.

The liquid here has the property of viscosity < 1000cP, and the description of the viscosity value in this disclosure refers to the Ozpid viscosity at room temperature (about 25 degrees Celsius). The optimal value of the viscosity of the liquid phase corresponding to the polishing method for the micro inner flow channel of different materials, sizes, and initial average roughness can be obtained by increasing the viscosity on the basis of a lower limit. The lower limit of viscosity of the present embodiments is about 50cP, and the inventors obtained the lower limit through a large number of test data that for the micro-inner flow channel of common materials such as titanium alloy, high-temperature alloy, steel, ceramics, aluminum alloy, polymer materials, etc., the viscosity of the liquid phase needs to be at least 50cP, and the target value of roughness is reached after polishing. The critical value of 1000cP here is generally not the optimal value, but the limit value for the continuous, polish and stable flow of the polishing medium in the micro inner flow channel.

The liquid phase described in the embodiments, taking the water-based liquid phase as an example, adds a certain viscosity on the basis of deionized water to make the water-based liquid have a certain viscosity. The beneficial effect of using water-based liquids is that they are easy to obtain at a low cost, they are environmentally friendly, and the polishing medium can be easily cleaned after polishing. However, it can be understood that the liquid phase here is not limited to water-based liquids, as long as it is a liquid with a viscosity < 1000cP.

The material of solid phase abrasive particles can be common abrasive materials, such as carbide ceramics: including silicon carbide, tungsten carbide, etc.; oxide ceramics: including alumina, zirconia, cerium oxide, etc.; Nitride ceramics: including boron nitride, chromium nitride, etc.; natural minerals: including diamond/sand, mica, quartz, olivine, etc. In some embodiments, it can be one or more combinations of diamond/sand and oxide ceramics.

When selecting the particle size and mass concentration of abrasive particles, the range of optimal values is generally gradually increased on the basis of a lower limit value. If the particle size and mass concentration of abrasive particles are lower than the lower limit value, the expected polishing effect cannot be achieved, that is, the micro inner flow channel cannot reach the target value of surface roughness, the principle is that if the particle size is too small, the mass of the abrasive particle itself is too low, and it is impossible to generate enough kinetic energy to achieve effective grinding and polishing, if the mass concentration is too small, the probability of grinding surface processing point is reduced and the effective grinding and polishing cannot be realized, and the selection of the lower limit value is generally conservative, for example, it can be conservatively selected any lower limit value under the premise of not exceeding the upper limit value of particle size. The lower limit of the ratio of the diameter of the inner flow channel to the particle size of the abrasive particle is usually 20, that is, the diameter of the inner flow channel should ensure that at least 20 abrasive particles pass through in parallel without blockage, that is, the upper limit of the particle size of the abrasive grain is usually 1/20 of the diameter of the inner flow channel, and the lower limit of the abrasive particle is generally 1/5 of the upper limit. The lower limit of the mass concentration of abrasive particles is generally 10g/L, and the selection of the lower limit is generally conservative, because the pressure of the system is large, and if the abrasive particles are blocked, it will lead to the scrapping of the workpiece and the system, and even cracking and explosion. Therefore, on the basis of the specified lower limit, the particle size and mass concentration of abrasive particles are gradually increased until the flow velocity and flow rate decrease are caused by significant flow resistance caused by the excessive size of abrasive particles or too high mass concentration, and the mutual collision between abrasive particles affects the flow rate and then reduces the flow rate and grinding effect, that is, the optimal value can be obtained by test on the basis of the lower limit value.

A predetermined pressure is applied to the polishing medium so that the polishing medium flows at a flow velocity of >5m/s in a micro inner flow channel. The predetermined pressure here refers to the use of the pressure in the initial state of the polishing process to make the polishing medium flow at a flow velocity of >5m/s inside the micro inner flow channel, with the progress of the polishing, the surface roughness of the inner flow channel decreases, and under the same pressure conditions, the flow velocity of the polishing medium in the micro inner flow channel will become faster and faster. It can be understood that since the flow velocity achieved is a range, the predetermined pressure here is a concept of a range, rather than only a specific value being applied to the polishing medium. Measurement of the flow velocity of the polishing medium inside the micro inner flow channel, which cannot be measured by immersion, otherwise the abrasive particles will damage any sensor probes. Ultrasonic velocimetry can be used, or the Hagen-Poazouyi law of viscous fluids can be used:

$$u_m^2 = \frac{D^2}{32 \cdot \rho_l \cdot l / \mathrm{Re}} \cdot \frac{p}{l}$$

to do indirect measurements. In the formula, where D is the diameter of the inner flow channel, $l$ is the length of the micro inner flow channel, $p$ is the pressure difference acting on the two ports of the micro inner flow channel, that is, the hydraulic pressure $p$, Re is the Reynolds number, $u_m$ is the flow velocity of the liquid phase in the water-based two-phase flow, $\rho_l$ is the density of the liquid phase, and the flow velocity of the liquid phase is roughly equivalent to the flow velocity of the polishing medium.

The flow velocity of the polishing medium is greater than 5m/s, according to the critical conditions for the formation of non-Newtonian fluids in theory and the critical values obtained by the inventor in long-term practice. Engineering fluid mechanics data show (e.g. *library materials:* Yang Shuren, Wang Zhiming, He Guangyu, et al. Engineering fluid mechanics[M]. Petroleum Industry Press, 2006.), the pure water viscosity 1cP reaches the critical motion flow velocity of the non-Newtonian fluid > 16.6m/s, and the lower limit of the viscosity of the liquid phase in the present embodiment is 50cP, which is greater than 1cP, so the critical flow velocity of the non-Newtonian fluid is less than 16.6m/s. At the same time, combined with the practical results, the inventors found that the ideal processing effect could not be obtained when it was less than 5m/s, so the critical value here is 5m/s.

The polishing medium flows into flow channel at one port of the micro inner flow channel at a flow rate reaching a saturation flow rate allowed by the bore of the micro inner flow channel, making the hydraulic pressure inside the inner flow channel be in a pressure holding state, that is, the state of saturation flow rate called in the art.

The saturation flow value of the accommodating flow rate and the state of the saturated flow rate here are the maximum number of fluid molecules that fill the pipe section when the fluid flows into the pipe, and the pipe section holds the fluid molecules in parallel.

It can be understood that the beneficial effects of the polishing method of using the above embodiments include but not limit to:

By using a two-phase flow polishing medium with a viscosity of less than 1000cP liquid phase, the flow velocity of the two-phase flow polishing medium in the micro inner flow channel is >5m/s, and flow rate of the polishing medium flowing into the micro inner flow channel at one end reaches a saturation flow value allowed by the bore of the micro inner flow channel, making the hydraulic pressure inside the inner flow channel be in a pressure holding state, that is, through the synergistic effect of the liquid phase of low viscosity, the flow velocity of the polishing medium and the saturation flow rate, problems of the polishing processing of the micro inner flow channel are solved. The principle is that, firstly, due to the synergistic effect of the low viscosity liquid phase, the flow velocity of the polishing medium and the saturation flow rate, the polishing medium can smoothly enter the complex micro inner flow channel and form a state similar to that of a non-Newtonian fluid in the complex micro inner flow channel, and the fluid boundary layer is parallel to the surface of the inner flow channel, and the abrasive shear friction in the hard non-Newtonian fluid is like a "cutter-like" to achieve surface bump targeted processing. In addition, the synergistic effect of the above three features makes the friction micro-cutting force generated between the surface of the flow velocity of the polishing medium and the saturation flow rate and abrasive particles of the polishing medium, so that the optimal roughness of the surface can be obtained without the material limitation of the complex micro inner flow channel, but equal to the average contact length range of the abrasive particles tip, and even can be obtained a ultra-mirror quality of the optimal surface roughness $Ra$ 0.05um, which breaks through the limitation of the principle of abrasive flow and water jet technology, and the principle is that the cutting mechanism of abrasive flow technology is the volume force generated by the surface of abrasive extrusion. Therefore, the processing of metal and polymer flexible materials with low hardness is prone to pits and pitting ($Ra>0.8\mu m$). In abrasive waterjet technology, the cutting force is the erosion force generated by the impact of the abrasive particles on the surface, and the processing of soft metal is easy to roughen the surface ($Ra>0.8\mu m$).

In addition, the hydrodynamic conformal processing method of low viscosity and high flow velocity makes the surface steps, sharp corners, geometric contour curvature and other positions that do not conform to fluid engineering on the surface of the inner flow channel to be more heavily ground, and the inflection point, sharp edge, curvature and hole shape of the inner flow channel will realize geometric streamline shaping, and further improve the fluid motion performance of the inner flow channel. In addition, the above embodiments propose a critical flow velocity of 5m/s to realize the targeted processed of surface bumps by using the flow velocity of the polishing medium to achieve a hard non-Newtonian fluid similar to that of a cutter-like and abrasive shear friction.

As for the processing time of the polishing medium in the micro inner flow channel, it can be that the polishing medium is polished in the micro inner runner in a standard time period until the optimal surface roughness of the micro inner runner is the target value. The standard time period herein can be a predetermined continuous period of time, or a multi-period of intermittent time, or it can be a non-predetermined continuous period of time after the start, after the flow rate of the polishing medium is detected to reach the flow rate corresponding to the optimal surface roughness of the surface roughness of the micro inner flow channel, the polishing process is automatically stopped, for example, in some embodiments, after the processing started, the optimal surface roughness is indirectly characterized by measuring the flow rate or flow velocity of the polishing medium inside the micro inner flow channel, when the flow rate or flow velocity reaches a specified value, the corresponding optimal surface roughness reaches the target value, and the polishing process is stopped manually or automatically. The meaning of the optimal surface roughness here is not limited to a directly measured optimal surface roughness, but can also be indirectly characterized, such as the flow rate and flow velocity of the polishing medium in the micro inner flow channel as described above. The above target value refers to the predetermined surface optimal roughness value, which generally refers to the requirement for the final surface optimal roughness of the micro inner flow channel, but it is not excluded that further surface roughness will continue after the above polishing steps, and the predetermined surface optimal roughness value is not the final surface optimal roughness requirement.

To sum up, the polishing method introduced in the above embodiments solves the long-standing problem of micro inner flow channel with a diameter of less than or equal to 3mm and an length-diameter ratio greater than or equal to 50:1 by using the combination of low-viscosity and high-speed solid-liquid two-phase fluid, achieving the saturation flow rate of the inner flow channel to be processed, and the micro-cutting mechanism generated by the high-speed friction of abrasive particles on the surface of the inner flow channel in the two-phase flow.

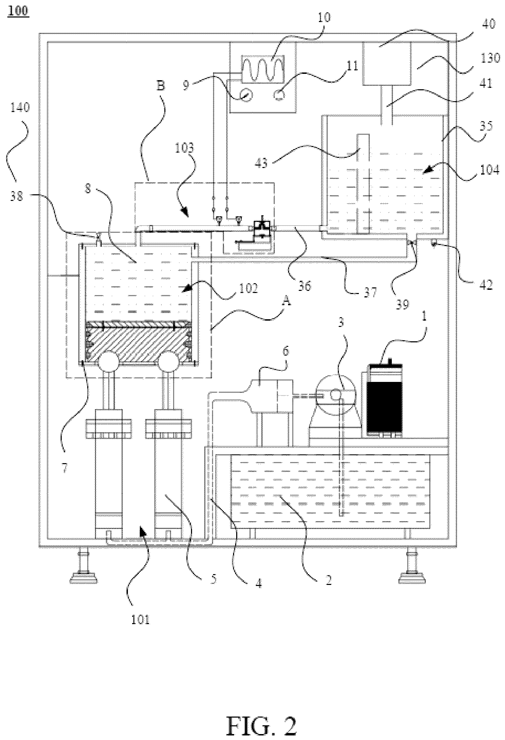

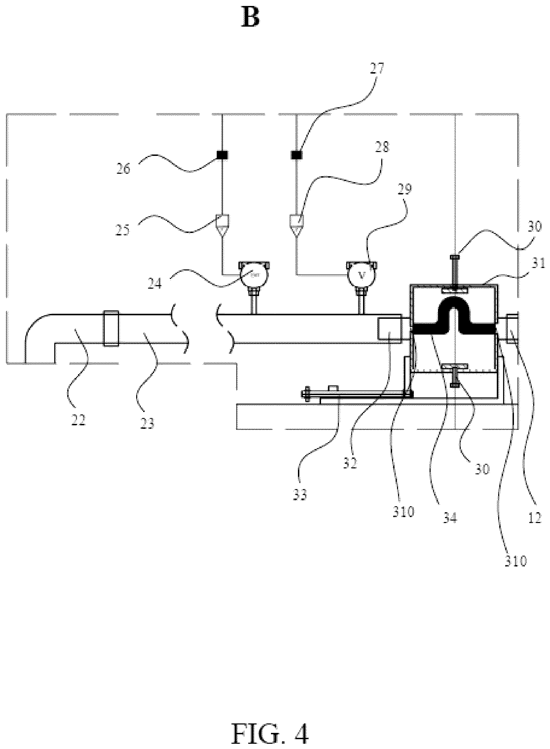

Referring to Fig. 2 and Fig. 4, in some embodiments, a polishing device 100 is provided, including: a thrust system 101, a sealing system 102, a conveying pipeline system 103 and a recycle system 104. The sealing system 102 includes a piston 21, a cylinder body 18 matched with the piston 21, and the cylinder body is used for accommodating a polishing medium 8 for carrying out polishing processing, and the thrust system 101 communicates with one end of the piston 21 to provide a driving force to the piston 21 to drive the polishing medium 8 to output from the outlet end 190 of the cylinder body 18. The conveying pipeline system 103 conveys the one-way processing port from the polishing medium 8 accommodated by the corresponding sealing system 102 to the inner flow channel workpiece 34 for polishing, such as the single sealing system 102 shown in Fig. 2 and the one-way processing port of the workpiece 34 corresponding to the conveying pipeline system 103. The meaning of the one-way processing port here is the port specified in workpiece 34 for the input of the polishing medium, which has already been introduced in the previous content. Referring to Fig. 4, in some embodiments, the polishing device can also include a tooling 31, the tooling 31 has at least two ports 310, and at least one inlet and at least one outlet corresponding to the workpiece 34. It can be seen that in the process of polishing processing, the polishing medium is always one-way, that is, it enters from the port 310 on the left and flows out from the port 310 on the right. The port 310 on the left side is the one-way processing port corresponding to the workpiece 34 described above, and is connected to the conveying pipeline system 103, and the port 310 on the right side is connected to the recycle system 104.

The recycle system 104 includes a recycle container 35, a recycle pipeline 36, a return pipeline 37, a driving assembly 130, and a control valve assembly 140, and the control valve assembly 140 comprises a first valve 38 and a second valve 39. the recycle container 35 is communicated to the workpiece 34 through the recycle pipeline 36, and is communicated to the sealing system 102 through the return pipeline 37. The first valve 38 is matched with a sealing system 102 and a low-pressure environment, wherein the low-pressure environment is relative to a high-pressure manufactured by the driving assembly 130, and for example, the low-pressure environment can be the pressure of the indoor environment where the polishing device 100 is placed. The second valve 39 is located at the return pipeline 37, cooperates with the recycle container 35 and the sealing system 102, and the driving assembly 130 communicates with the recycle container 35 and can provide pressure to the recycle container 35. The beneficial effects of the embodiments introduced above include but not limit to, through setting up the recycle system, the recycle system uses the synergistic effect of the first valve 38, the second valve 39 and the two with the sealing system 102, the recycle container 35, the return pipeline 37, the driving assembly 130, which not only ensures that the return flow of the sealing system and the output flow of the sealing system conveying the polishing medium do not interference, but also makes the polishing medium accommodated in the recycle system can flow back to the sealing system quickly, realizing a rapid supplement of the polishing medium to the sealing system, and ensuring high efficiency of polishing processing.

Referring to Fig. 2 and Fig. 4, in some embodiments, synergistic effect of the first valve 38, the second valve 39 and the sealing system 102, the recycle container 35, the return pipeline 37, and the driving assembly 130 is that: the polishing device 100 has a first state and a second state, and the first valve 38 is a spray stop valve, wherein: In the first state, that is, in the process of carrying out polishing processing, a single sealing system 102 conveys the polishing medium to the conveying pipeline system 103 and then to the one-way processing port of the workpiece 34, because the pressure of the polishing medium 8 accommodated in the sealing system 102 provided by the piston is high, so the polishing medium 8 also pushes the first valve 38 arranged at the top of the cylinder body 18 with a high pressure, and the nozzle of the first valve 38 is affected by the pressure of the polishing medium 8, and the injected polishing medium pushes a baffle plate so that the nozzle flapper valve is in a closed state, causing the first valve 38 to be closed, and the second valve 39 is also in a closed state at this moment. The flow direction of the polishing medium 8 is from the sealing system 102 to the workpiece 34 and then from the workpiece 34 to the recycle container 35 for storage.

In the second state, because the sealing system 102 can accommodate limited the polishing medium, after the piston pushes the polishing medium in the cylinder body empty, the sealing system stops conveying the polishing medium to the conveying pipeline system, and at this moment, because the polishing medium accommodated by the sealing system stops acting on the nozzle of the first valve 38, the nozzle of the first valve 38 does not inject of the polishing medium, and the baffle plate of the nozzle flapper valve is reset to the position of opening the first valve 38, so that the sealing system 102 is communicated with a low-pressure environment. And at this moment, the second valve 39 is opened after sensing the mass threshold in the recycle container by a sensor, the recycle container 35 is directly connected with the sealing system 102 through the return pipeline 37, and the driving assembly 130 exerts pressure to the recycle container 35 to a first pressure, so that the recycle container 35 has a pressure difference with the sealing system that is the pressure different between the first pressure and the low-pressure environment, and under the effect of this pressure difference, the polishing medium accommodated in the recycle container 35 flows back to the sealing system quickly through the return pipeline 37.

In some embodiments, the driving assembly 130 includes an air compressor device or an air pump device 40 and a pressure pipe 41, thereby pressing the recycle container 35, but is not limited to this.

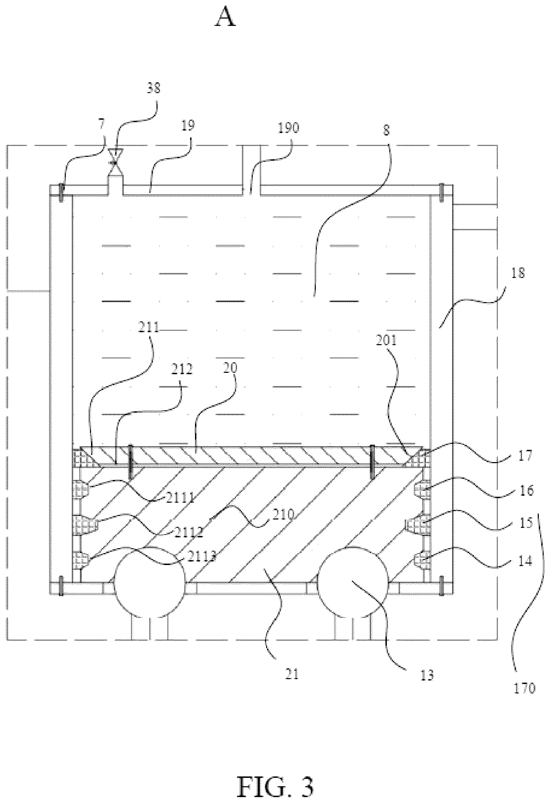

The nozzle flapper valve is used to realize the switching between the first state and the second state, which is reliable. The principle is that the nozzle in the nozzle flapper valve can adapt to high pressures and has sufficient strength, sealing and jet performance for high-speed polishing medium, so as to effectively push the baffle to ensure the high sensitivity and reliability of the nozzle flapper valve state switching. Referring to Fig. 2 and Fig. 3, in some embodiments, the second valve 39 is a solenoid valve, the control valve assembly 140 further includes a sensor 42, the sensor 42 is used for sensing the mass of the polishing medium 8 accommodated by the recycle container 35, and the second valve 39 is opened or closed according to the result sensed by the sensor 42. For example, when in the second state, if when the sensing signal that sensor 42 senses is fed back to the control unit, and the control unit judges that the mass of the polishing medium 8 accommodated by the recycle container 35 exceeds a threshold, and the threshold is generally 85%~98% of the total mass of the polishing medium in the sealing system, and the reason is that the first valve 38, the conveying pipeline system 103, and the sealing system 102 may have residual polishing medium, so there needs to be a certain amount reserved for the mass loss of the polishing medium, In addition, the threshold value should not be set too small, to avoid that the solenoid valve as the second valve 39 has already been opened while the sealing system 102 still accommodate some polishing medium 8, causing a reverse flow accident that the sealing system 102 conveys the polishing medium of high pressure to the recycle system through the recycle pipeline 36. As for a specific value of 85%~98%, according to the residual mass of the polishing medium in the first valve 38, in the conveying pipeline system 103, and in the sealing system 102 is different, the specific value can be adjusted by field test, for example, a larger threshold is set first, such as 98%, the first valve 38 is observed to be opened and still does not reflux, then the threshold is reduced accordingly, and the actual threshold is finally obtained. And, generally, the control unit can command the solenoid valve as the second valve 39 to open again after reaching the threshold after a delay of three seconds, and the delay of three seconds is to prevent that t, and the solenoid valve as the second valve 39 has already been opened while the polishing medium in the sealing system is not empty thereby causing the reverse flow accident that the sealing system 102 to convey the polishing medium of high pressure to the reverse flow accident of the recycle system through the recycle pipeline 36. The control through the solenoid valve is more sensitive and accurate, which further prevents interference between the return flow of the sealing system and the output flow of the sealing system to convey the polishing medium. In some embodiments, the sensor 42 is a gravity sensor, and the height of the recycle container 35 is higher than the height of the sealing system 102, so that the reliability of the sensing result of the gravity sensor can be fully utilized, and at the same time, the recycle container 35 is higher than the sealing system 102 will make the polishing medium 8 improve reflux by using gravity, and the efficiency of reflux is further improved.

Continuing referring to Fig. 2, in some embodiments, the recycling container 35 is a transparent container, and the polishing medium accommodated by the recycle container is externally visible, and the specific transparent material can be transparent glass, acrylic and other materials. The transparent container that is visible externally is used as the recycle container 35, so that an operator can directly observe the characteristic information such as the amount of bubbles on the surface of the polishing medium, the color of the liquid phase, the homogeneous state of the abrasive solid phase in the recycle container 35, and the proportion of the liquid phase and the bubble gas phase in the polishing medium is judged accordingly, and the color of the liquid phase is judged to determine whether there is deterioration of organic components such as tackifier and affect the processing result and meeting the environmental protection requirements. And judge whether the agglomeration and sedimentation phenomenon of abrasive particles solid phase occur in the polishing medium 8 of sealing system 102, etc., and the state of the polishing medium and the polishing process are intuitively and effectively monitored.

In addition, in some embodiments, a wall of the recycling container 35 has a volume scale mark 43, so that the volume of the polishing medium entering the recycle container 35 per time unit can be judged, so that the flow rate and flow velocity of the polishing medium in the workpiece 34 can be further judged, and the change of flow rate and flow velocity can be monitored, so as to diagnose whether the polishing quality of the inner flow channel has reached the required flow velocity and whether there is a velocity fluctuation. At the same time, the scale mark can more accurately judge the volume of each phase of solid, liquid and gas of the polishing medium.

In addition, a thermometer or a viscometer can also be provided in the recycle container 35 to judge whether the temperature and viscosity of the polishing medium change greatly.

Because the pressure to the recycle container 35 is very low in the operating state of the polishing device 100, compared with a high pressure to the sealing system 102, the setting of the recycle container 35 can also be used as a way for the operator to intuitively monitor the state change of the polishing medium and the polishing process. In some embodiments, the length-diameter ratio of the conveying pipeline system 103 is greater than 10:1, and the diameter of the outlet end is greater than 3mm, the conveying pipeline system 103 has multi-stage pipelines, and the cross-sectional area ratio of the previous first-stage pipeline and the latter first-stage pipeline of the adjacent two-stage pipelines is greater than 1.

In some embodiments, the thrust system 101 includes a vertical piston pump 5, the vertical piston pump 5 is connected with the piston 21 to provide a driving force, so that the piston 21 can move along the vertical direction with respect to the cylinder body 18. The multi-stage pipeline includes a first-stage pipeline 22, and a second-stage pipeline 23 that is downstream adjacent to the first-stage pipeline, and the first-stage pipeline includes an elbow structure that is connected with the outlet end 190 of the cylinder body 18, and the elbow structure is connected with the horizontally extending second-stage pipeline 23, so that the combination of vertical structure and horizontal structure is realized.

In some embodiments, the thrust system 101 is a hydraulic system, as shown in Fig. 2, including a motor 1, a hydraulic oil tank 2, a hydraulic pump 3, a booster 6, a vertical piston pump 5 and an oil pipe 4. The motor 1 drives the hydraulic pump 2 to draw the hydraulic oil of certain pressure from oil tank 2, and the pressure oil after boosted by booster 6 is transported to vertical piston pump 5. The vertical piston pump 5 is connected with the piston 21 through a ball head 13 to drive the piston 21 to drive the polishing medium 8 to output from the output end 190 of the cylinder body 18. The hydraulic system is driven by an electric motor, which not only has a high thrust but also has a high accuracy.

Corresponding to vertical piston pump 5, the sealing system 102 also needs to be a vertical structure, that is, the moving direction of the piston 21 relative to the cylinder body 18 is to move relative along the vertical direction, but the corresponding processing workpiece 34 needs to be horizontal, so the change of direction can be realized by the conveying pipeline system.

The cylinder body 18 defines space through a bottom plate and a top plate 19, and the bottom plate and the top plate 19 can be connected to the cylinder body 18 through a bolt 7, the space between the piston 21 and the top plate 19 is to accommodate the polishing medium 8, and an opening of the top plate 19 is the outlet end 190 of the sealing system 102. The diameter ratio of cylinder block 18 and the outlet end 190 is 10~32, so that the polishing medium is further pressurized. Referring to Fig. 4, in some embodiments, the cross-sectional area ratio of the first stage pipeline 22 and the second stage pipeline 23 is 1.2~1.8, so that the polishing medium can be pressurized stably and slowly, and a saturation flow rate can be maintained all the time. In some embodiments, the multi-stage pipeline may also include a third- stage pipeline 32 located in the adjacent connection downstream to the second-stage pipeline 23, the cross-sectional area ratio of the second-stage pipeline 23 and the third-level pipeline 32 is 1.2~1.8, as shown in the figure, the length of the third-stage pipeline 32 can be short, similar to a form of a joint. Using the structure of three-stage pipeline, and the cross-sectional area ratio of each stage is 1.2~1.8, realizes a stable and slow pressurization, and keep the saturated flow rate all the time, not only ensures the condition of providing stable pressure to the polishing medium, but also ensure the strength, reliability and service life of the conveying pipeline system 103.

Referring to Fig. 4, in some embodiments, the polishing device further includes a tooling 31, the tooling 31 has at least two ports 310, at least one inlet and at least one outlet corresponding to the workpiece 34, the tooling 31 can be stably fixedly installed through a three-axis caliper 33 on a workbench, and the workpiece 34 can be clamped and fixed inside the tooling 31 through a workpiece clamping bolt 30. The ratio of the port cross-sectional area of the third-stage pipeline 32 and the tooling 31 connected to it can be 1.2~2.2, so that the beneficial effect is similar to the above, this is, the pressure is increased steadily and slowly, and the saturated flow rate is maintained all the time. It can be noted that the upper limit value of the cross-sectional area ratio of the third-stage pipeline 32 and the tooling 31 connected with it can be 2.2, which is higher than the upper limit value of 1.8 of the cross-sectional area ratio between the pipelines, because the tooling 31 is generally frequently replaced, and its requirements for service life are not as strict as that of the pipeline, so the upper limit of the cross-sectional area ratio can be set higher. In some embodiments, the ratio of the cross-sectional area of the tooling port to the workpiece 34 port should be higher than 1, but not more than 10, and the two can be sealed with epoxy resin sealing. The ratio higher than 1, making the flow in the flow channel in the workpiece reach the saturation flow, but if the ratio is too high, the inventors found that it will cause the pressure relief at the port of the workpiece 34 to be too large, and the strength and sealing requirements of the connection between the port and the workpiece are very high, and there will even be safety accidents such as the fracture of the connection, so the inventors found that the ratio should not exceed 10. It can be understood that many ports 310 suitable for the inner flow channel of different diameter workpieces can be reserved on the tooling 31. When one of the ports is used, the other unused ports can be closed by bolts. The clamping bolt 30 of the tooling 31 includes an upper clamping bolt and a lower clamping bolt, and the workpiece 34 of different sizes can be clamped, and the tooling port and the flow channel port in the workpiece are adjusted to the same axis with the tooling port and the multi-stage pipeline port.

The inventors found that the conveying pipeline system of the multi-stage pipeline introduced in the above embodiments, combined with the structure of the thrust system of the hydraulic pump and the vertical piston pump, and the structure of the combination of vertical and horizontal, can still achieve high accuracy (the error is 0.01MPa) under the condition of providing more than 50MPa thrust, and the pressure fluctuation in operation is very small, between plus or minus 0.1%, and the polishing method described above can be very effectively realized.

Referring to Fig. 2 and Fig. 3, for the sealing system 102, the inventors found that because it is necessary to provide a high pressure to the polishing medium, the sealing problems between the piston 21 and wall of cylinder body 18 are particularly important, and while guaranteeing the tightness, it is also necessary to ensure that a smooth movement of the piston 21 along the wall of the cylinder piston 18.

The piston 21 has at least a first groove 211 and a second groove 210 from top to bottom, and the sealing system 102 further includes a sealing ring positioned between the piston 21 and the cylinder body 18, and the sealing rings includes a first sealing ring 17 arranged in the first groove 211, and a second sealing ring 170 arranged in the second groove 210, and a gap between the piston 21 and the cylinder body 18 in the radial direction is 1mm~2.5mm, using a multi-stage groove and a multi-stage sealing ring and setting the gap between the piston and the cylinder body is 1mm~2.5mm make the first stage sealing ring filter the abrasive particles of two-phase polishing medium, and the second stage sealing ring seals the liquid phase, such as the water-based liquid phase, so as to achieve good sealing performance for the polishing medium, in the gap range of 1mm~2.5mm, the inventors found that the piston can not only maintain a good sealing effect, but also ensure that the piston can move smoothly along the wall surface of the cylinder body 18, and improve the output of the polishing medium 18.

Continuing referring to Fig. 3, the first groove 211 of the piston 21 is a split structure, a top surface 212 of the body of the piston 21 is a flat surface, a cover plate 20 is detachably arranged on it, periphery of the cover plate 20 has an inclined surface 201, and the inclined surface 201 and the top surface 212 of the piston 21 form a unilateral inclined groove and constitutes the first groove 211. The second groove 210 is formed in the side wall of the piston. The material of the first sealing ring 17 is a hard polymer material, and the material of the second sealing ring 170 is a soft polymer material. The principle is that, the inventors found that because the pressure is high, no matter how the first sealing ring is sealed, the abrasive particles will be embedded from the gap between the cylinder wall and the sealing ring and cause scratches to the sealing ring, so setting a unilateral inclined and a hard sealing ring guides the abrasive particles to actively embed into the first sealing ring 17 to form an embedded self-sealing structure, that is why the first sealing ring 17 is a hard polymer material. After most of the abrasive particles actively embed into the first sealing ring 17, the substance that needs to be sealed by the second sealing ring 170 is the liquid phase in the two-phase polishing medium, so a soft second sealing ring 170 is used for sealing. The first groove 211 is a split structure, because the inventors found that because the first sealing ring 17 uses a hard polymer structure and is subjected to high pressure, if a groove is directly set up in the piston side wall, the first sealing ring 17 cannot be fixed, so a split structure is used, and when assembling, the first sealing ring is first arranged on the top surface 212 of the body of the piston 21, and then covered by the cover plate 20 and clamped by the bolt 7. In some embodiments, the inclination angle of the unilateral groove, that is the inclination angle of the inclined surface 201 is greater than 60° to provide sufficient clamping force.

In some embodiments, the specific materials of the first sealing ring 17 and the second sealing ring 170 are, and the polymer material of the first sealing ring meets following requirements: bending modulus 1.9GPa~3.6GPa, elongation 60%~120%, Knoop hardness 90HK-100HK, so that the first sealing ring 17 has a certain stiffness and is not easy to occur obvious deformation, and at the same time has a good surface self-lubrication performance, and at the same time has a low extrusion shrinkage and the abrasive particles can be easily embedded in the material and the abrasive particles are easy to continue to slip in the material after embedding. The polymer material of the second sealing ring 170 meets following requirements: bending modulus 0.2GPa~0.25GPa, elongation 300%~380%, bending strength 80MPa~100MPa, so that the second sealing ring 170 has good elasticity and has good expansion and contraction flexibility, and at the same time, it is necessary to have the significant extrusion shrinkage length to ensure good water-based sealing capability, as well as high bending strength, otherwise it is easy to break after bending.

In some embodiments, the material of the first sealing ring 17 can be one of PP, polytetrafluoro, nylon, PEEK, and the material of the second sealing ring 170 can be one of silica gel, rubber, nitrile, and the above materials are easy to obtain, and the cost is lower.

Continuing referring to Fig. 3, the second groove 211 includes at least two grooves from the top to the bottom direction, including a sub groove 2111, and a second sub groove 2112, and the depth ratio of the second sub groove 2112 to the first sub groove 2111 is 1.2~1.5. Further, a third sub groove 2113 can be further set in the bottom direction of the second sub groove 2112, and even more sub grooves can be further set. The depth ratio of the second sub groove 2112 to the third sub-groove 2113 is 1.2~1.5. The second sealing ring 170 corresponding to the first sub groove 2111, the second sub groove 2112 to the third sub groove 2113 are respectively sealed rings 16, 15 and 14, and their functions are all sealing water, the shape of the groove can use a trapezoidal groove that is easy to process and fix the sealing ring, and the beneficial effect of the depth of the second sub groove 2112 is more than its adjacent first sub groove 2111 and the third sub groove 2113 is that the liquid phase of the polishing medium can be sealed in stages and reliably, which the first sub groove 2111 realizes a preliminary seal, while the second sub groove 2112 realizes a complete seal, and the third sub groove 2113 realizes a safety seal.

Continuing referring to Fig. 3, in some embodiments, the wall of cylinder body 18 has a coating, the thickness of the coating is 50μm~220μm, the hardness is 1500HV~2200HV, and the material is an oxide, carbide, boride and nitride ceramics or combination. The beneficial effect is to ensure the reliability of the sealing effect. The principle is that the inventors found that during the operation of the device, due to the high-speed movement of the two-phase flow of the liquid phase and the abrasive particles of solid phase, the abrasive particles will be mixed in the gap between the sealing ring and the cylinder body and rub the cylinder wall, and once the wall is rubbed out of scratches, it will cause the failure of the sealing system and the leakage of the liquid phase, so the wall must be hard. The process of the coating described above can achieve wear resistance of the wall by means of a special flame spraying WC coating in the cylinder. The composition of the flame spraying WC coating of the cylinder body is: WC powder particle size 15~100μm, WC powder content >85%, molybdenum powder content 1%~4%, silicon powder content 1%~5%, boron powder content 1~5%, after flame spraying sintering, molybdenum-silicon-boron alloy phase is formed in the WC coating, molybdenum-silicon-boron alloy has a low friction coefficient, and at the same time doping in the WC coating as a strengthening phase to improve the strength and hardness of the WC coating. The particle temperature < 1500 degrees Celsius during spraying, and the thermal deformation of the cylinder body after heating is reduced at low temperature and the final cylinder size accuracy is ensured, the spray distance is 10mm~50mm, and the small spray distance ensures that the coating adhesion force is >100MPa. In some embodiments, the roughness of the surface of the coating is *Ra* 0.05μm~0.4μm, the roundness of the cylinder block is ≤100μm and the cylindricity is ≤200μm, and the diameter of the cylinder body is 100mm~400mm, so as to prevent the relative motion of the piston and the cylinder body from causing the coating to be damaged and cause peeling, and further ensure the life of the sealing system and the reliability of the sealing effect. The process to achieve this effect can be the coating for surface honing, the honing tool is made of zirconia ceramic tools, the honing speed is < 80 rpm, and the low honing speed ensures that the coating will not peel, chipping and falling off during the honing process. Continuing with reference to Fig. 2, the polishing device 10 also includes a diagnostic device with a flow rate and/or flow velocity sensor, and a pressure sensor for sensing the flow rate and/or flow velocity of the polishing medium, as well as the pressure, thereby diagnosing the state of the polishing process. The sensor can be arranged at the upstream end of the workpiece 34 at a relatively close distance, and the principle is that, the inventors found that if the polishing process is carried out normally, the flow rate/flow velocity/pressure of the polishing medium at the upstream end of the micro inner flow channel will only be affected by the configuration of the inner flow channel and the surface quality of the inner flow channel. The flow resistance and flow rate of the inner flow channel itself will produce a reaction force that directly acts on the flow velocity/flow rate/pressure at the upstream end. The downstream end of the inner flow channel has a larger cross-sectional area than the inner flow channel, so the polishing medium is in a "no-load" free flow state at the downstream end after flowing out of the inner flow channel, and the downstream end of the inner flow channel will not affect the flow velocity/flow rate/pressure of the upstream end. Therefore, only the change in the inlet velocity at the upstream end needs to be measured to reflect the polishing quality of the inner flow channel.

The pressure sensor includes a high-sensitivity piezoelectric quartz sensor 28 and a high-resolution multi-channel data acquisition device 27 that monitors the manometer 29 data from multiple ports in real time, and completely records the quasi-static and highly dynamic pressure processes in the polishing process, so as to obtain accurate flow resistance data in each flow channel and ensure the polishing result. The flow rate and/or flow velocity sensor includes a flow rate/flow velocity meter 24, a flow rate/flow velocity piezoelectric sensor 25, a flow rate/flow velocity data collector 26, and uses an ultrasonic measurement, and an ultrasonic flow meter based on the Doppler method principle synchronizes the flow rate/flow velocity of multiple ports. Ultrasonic is a non-contact measurement, which can completely avoid the damage of two-phase polishing medium to the flow meter, greatly improve the response sensitivity of the overall system, and obtain the optimal polishing time.

Although the above embodiments of the present disclosure are disclosed as above, they are not used to limit the present disclosure. Therefore, any amendments, equivalent changes and modifications made to the above embodiments of the present disclosure without departing from the proposal of the present disclosure fall within the scope of protection defined in the claims of the present disclosure.

## Claims

1. A polishing device, comprising:

   a thrust system;
   a sealing system comprising a piston and a cylinder body matched with the piston for accommodating a polishing medium for polishing, the thrust system communicating with one end of the piston, and providing a driving force to the sealing system to drive the polishing medium to output from an outlet end of the cylinder body;
   a conveying pipeline system, the conveying pipeline system conveying the polishing medium accommodated by the corresponding sealing system to one end of an inner flow channel workpiece for polishing, an upstream end of the conveying pipeline system being connected with an outlet end of the sealing system, and a downstream end being used for outputting the polishing medium to polish the inner flow channel workpiece;
   a recycle system comprising a recycle container, a recycle pipeline, a return pipeline, a driving assembly, and a control valve assembly, wherein the control valve assembly comprises a first valve, a second valve; and the recycle container is communicated with the workpiece through the recycle pipeline, and communicated with the sealing system through the return pipeline; and the first valve is matched with the sealing system and a low-pressure environment, and the second valve is located at the return pipeline, and is coordinated with the recycle container and the sealing system, and the driving assembly is communicated with the recycle container, providing driving force to the recycle container, to make the polishing medium in the recycle container flow back to the cylinder body;

   wherein, the piston has at least a first groove and a second groove from top to bottom, and the sealing system further comprises a sealing ring positioned between the piston and the cylinder body, the sealing ring comprises a first sealing ring arranged in the first groove and a second sealing ring arranged in the second groove, and a gap between the piston and the cylinder body in a radial direction is 1mm~2.5mm; wherein, the first groove is a split structure, and a top surface of the piston is a flat surface, and a cover plate is detachably arranged on it, and periphery of the cover plate has an inclined surface, and the inclined surface and the top surface of the piston form a unilateral inclined groove and constitutes the first groove; and the second groove is formed in a side wall of the piston; and material of the first sealing ring is a hard material, and material of the second sealing ring is a soft material.

2. The polishing device of claim 1, wherein the first valve is a nozzle flapper valve, and the polishing device has a first state and a second state, wherein:

in the first state, the sealing system conveys the polishing medium to the conveying pipeline system, and the polishing medium accommodated by the sealing system acts on a nozzle of the nozzle flapper valve to close the nozzle flapper valve, and the second valve is closed;
in the second state, the sealing system stops conveying the polishing medium to the conveying pipeline system, the polishing medium accommodated by the sealing system stops acting on the nozzle of the nozzle flapper valve, to open the nozzle flapper valve, and the sealing system is communicated with the low-pressure environment, and the second valve is opened, and the driving assembly exerts pressure to a first pressure on the recycle container, and a pressure difference between the recycle container and the sealing system by a pressure difference between the first pressure and the low-pressure environment.

3. The polishing device of claim 2, wherein the second valve is a solenoid valve, and the control valve assembly further comprises a sensor, the sensor is used for sensing mass of the polishing medium of the recycle container, and the solenoid valve is opened or closed according to sensing result of the sensor.

4. The polishing device of claim 3, wherein the sensor is a gravity sensor, and height of the recycle container is higher than height of the sealing system.

5. The polishing device of claim 1, wherein the recycle container is a transparent container, and the polishing medium accommodated by the recycle container is externally visible.

6. The polishing device of claim 5, wherein a wall of the recycle container has a volumetric scale mark.

7. The polishing device of claim 1, wherein the recycle container is provided with a thermometer or a viscometer.

8. The polishing device of claim 1, wherein it further comprises a diagnostic device, the diagnostic device has a flow rate and/or a flow velocity sensor, and a pressure sensor, for sensing the flow rate and/or flow velocity, as well as the pressure of the polishing medium.

9. The polishing device of claim 1, wherein the material of the first sealing ring meets following requirements: bending modulus 1.9GPa~3.6GPa, elongation 60% ~120%, Knoop hardness 90HK~100HK; and the material of the second sealing ring meets following requirements: bending modulus 0.2GPa~0.25GPa, elongation 300%~380%, bending strength 80MPa~100MPa.

10. The polishing device of claim 1, wherein the polishing medium comprises a liquid phase and a solid phase, and viscosity of the liquid phase < 1000cP, and the solid phase comprises abrasive particles, and the workpiece is a micro inner flow channel piece, and a diameter is less than or equal to 3mm and a length-diameter ratio is greater than or equal to 50:1.

11. A polishing method of an inner flow channel piece, wherein a polishing device is used as claimed in any one of claims 1-10, a polishing medium comprises a liquid phase and a solid phase, and viscosity of the liquid phase < 1000cP, the solid phase comprises abrasive particles, and the workpiece is a micro inner flow channel piece, and a diameter is less than or equal to 3mm and a length-diameter ratio is greater than or equal to 50:1, and the thrust system of the polishing device exerts a predetermined pressure on the polishing medium, making the polishing medium flow in the micro inner flow channel at a flow velocity more than 5m/s, and flow rate of the polishing medium flowing into the micro inner flow channel at one end reaches a saturation flow rate allowed by the bore of the micro inner flow channel, making the hydraulic pressure inside the inner flow channel be in a pressure holding state.

a liquid-solid two-phase polishing medium is used, the viscosity of the liquid phase of the polishing medium is < 1000cP, and the solid phase includes abrasive particles

a predetermined pressure is applied to the polishing medium, making the polishing medium flow in the micro inner flow channel at a flow velocity more than 5m/s, and flow rate of the polish polishing medium flowing into the micro inner flow channel at one end reaches a saturation flow value allowed by the bore of the micro inner flow channel, making the hydraulic pressure inside the inner flow channel be in a pressure holding state

FIG. 1

FIG. 2

A

FIG. 3

EP 4 537 981 A1

B

FIG. 4

20

## INTERNATIONAL SEARCH REPORT

| International application No. |
| --- |
| **PCT/CN2023/098692** |

**A. CLASSIFICATION OF SUBJECT MATTER**

B24B31/116(2006.01)i; B24B31/12(2006.01)i

According to International Patent Classification (IPC) or to both national classification and IPC

**B. FIELDS SEARCHED**

Minimum documentation searched (classification system followed by classification symbols)

IPC:B24B

Documentation searched other than minimum documentation to the extent that such documents are included in the fields searched

Electronic data base consulted during the international search (name of data base and, where practicable, search terms used)

CNTXT, VEN, ENTXT, CJFD: 光整, 密封, 回收, 循环, 阀, 介质, 磨料, 回流, 补充, 低压, 斜面, 软质, finishing, polishing, sealing, recycling, valve, medium, power, reflow+, recovery, low pressure, beveled, edge, soft

**C. DOCUMENTS CONSIDERED TO BE RELEVANT**

| Category* | Citation of document, with indication, where appropriate, of the relevant passages | Relevant to claim No. |
| --- | --- | --- |
| PX | CN 114750063 B (AECC COMMERCIAL AIRCRAFT ENGINE CO., LTD. et al.) 13 September 2022 (2022-09-13)<br>  claims 1-11 | 1-11 |
| A | US 2002028633 A1 (EXTRUDE HONE CORP.) 07 March 2002 (2002-03-07)<br>  description, paragraphs 41-51 and 67-68, and figures 1-7A | 1-11 |
| A | CN 104526531 A (LU YING) 22 April 2015 (2015-04-22)<br>  entire document | 1-11 |
| A | JP 2002355746 A (STEC INC.) 10 December 2002 (2002-12-10)<br>  entire document | 1-11 |
| A | JP 2004114241 A (NACHI FUJIKOSHI CORP.) 15 April 2004 (2004-04-15)<br>  entire document | 1-11 |
| A | JP 2009226507 A (DENSO CORP.) 08 October 2009 (2009-10-08)<br>  entire document | 1-11 |

☐ Further documents are listed in the continuation of Box C.   ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **18 September 2023** | **27 September 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/098692**

| Patent document cited in search report | | | Publication date (day/month/year) | Patent family member(s) | | | Publication date (day/month/year) |
|---|---|---|---|---|---|---|---|
| CN | 114750063 | B | 13 September 2022 | CN | 114750063 | A | 15 July 2022 |
| US | 2002028633 | A1 | 07 March 2002 | US | 6500050 | B2 | 31 December 2002 |
| | | | | EP | 1186377 | A2 | 13 March 2002 |
| | | | | EP | 1186377 | A3 | 02 January 2004 |
| | | | | EP | 1186377 | B1 | 19 October 2011 |
| | | | | CN | 1347788 | A | 08 May 2002 |
| | | | | CN | 1137800 | C | 11 February 2004 |
| | | | | JP | 2002126994 | A | 08 May 2002 |
| | | | | JP | 4824227 | B2 | 30 November 2011 |
| CN | 104526531 | A | 22 April 2015 | CN | 104526531 | B | 01 February 2017 |
| JP | 2002355746 | A | 10 December 2002 | JP | 3711250 | B2 | 02 November 2005 |
| JP | 2004114241 | A | 15 April 2004 | JP | 3737467 | B2 | 18 January 2006 |
| JP | 2009226507 | A | 08 October 2009 | | None | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YANG SHUREN** ; **WANG ZHIMING** ; **HE GUANGYU et al.** Engineering fluid mechanics. Petroleum Industry Press, 2006